# EUROPÄISCHE PATENTSCHRIFT

(11) **EP 1 096 163 B1**
(45) Veröffentlichungstag und Bekanntmachung des Hinweises auf die Patenterteilung: **07.06.2006**
(21) Anmeldenummer: 00122762.8
(22) Anmeldetag: 19.10.2000
(51) Int. Cl.: F16D 7/02, A01D 69/08

(54) **Sicherheitskupplung für landwirtschaftliche Arbeitsmaschine, insbesondere Mähmaschine**
Safety coupling for working machine especially mower
Accouplement de sécurité pour machine de travail en particulier faucheuse

(30) Priorität: 27.10.1999 DE 19951644
(43) Veröffentlichungstag der Anmeldung: 02.05.2001
(73) Patentinhaber: Maschinenfabrik Kemper GmbH & Co. KG, 48703 Stadtlohn (DE)
(72) Erfinder: Wübbels, Richard, 46414 Rhede (DE)
(74) Vertreter: Magin, Ludwig Bernhard

(56) Entgegenhaltungen:
- EP-A- 0 057 807
- FR-A- 1 191 235
- FR-A- 2 488 775
- DATABASE WPI Section PQ, Week 199311 Derwent Publications Ltd., London, GB; Class Q63, AN 1993-092446 XP002161013 & SU 1 726 864 A (REFRIG EQUIP DES CONS TECHN INST), 15. April 1992 (1992-04-15)

## Beschreibung

Die Erfindung betrifft eine landwirtschaftliche Arbeitsmaschine für einen Anbau an einen Schlepper oder dgl. selbstfahrendes Fahrzeugs, insbesondere Mähmaschine zum Mähen von Gras, Getreide oder anderen Halmfrüchten, nach dem Oberbegriff des Anspruchs 1.

Im Zuge der Rationalisierung der Erntebetriebs werden landwirtschaftliche Arbeitsmaschinen mit großer Arbeitsbreite in Verbindung mit entsprechend leistungsstarken Schleppern eingesetzt. Dies gilt in besonderem Maße für Mähmaschinen zum Mähen von Gras, Getreide oder anderen Halmfrüchten, wie insbesondere Mais, die als Vorsatzgeräte für mit einem Häcksler ausgerüstete Schlepper verwendet werden. Die rotierenden Arbeitswerkzeuge bestehen hierbei aus Einzugs- und Mähtrommeln, von denen das Erntegut gemäht und anschließend dem Häcksler zugeführt wird. Das Arbeitsgetriebe des Schleppers, das die Antriebseinrichtung für die Einzugs- und Mähtrommeln antreibt, ist in diesem Fall von dem Zentralgetriebe bzw. Schnittlängengetriebe des Häckslers gebildet. Solche Feldhäcksler verfügen über leistungsstarke Motoren von bis zu 500 PS, wobei entsprechend hohe Antriebsleistungen auf die Einzugs- und Mähtrommeln als rotierende Arbeitswerkzeuge aufzubringen sind, von denen mehrere auf beiden Seiten der vertikalen Längsmittelebene der Maschine angeordnet sein können. Da die Einzugs- und Mähvorrichtungen als rotierende Arbeitswerkzeuge große, für das Anfahren der Maschine zu beschleunigende Massen bilden, ist die Antriebseinrichtung der Werkzeuge mit zumindest einer Rutschkupplung als Anlauf- und zugleich Sicherheitskupplung ausgestattet, durch die das übertragbare Drehmoment zwischen der fahrzeugseitigen Antriebswelle und der Antriebseinrichtung der rotierenden Arbeitswerkzeuge in an sich bekannter Weise begrenzt wird.

Im praktischen Arbeitseinsatz derartiger großer landwirtschaftlicher Arbeitsmaschinen, zeigt sich, daß das durch die Rutschkupplung übertragbare höchste Drehmoment beim Anfahren der Maschine häufig überschritten wird, wenn, entgegen der Betriebsanweisung des Maschinenherstellers, der Anfahrvorgang vom Schlepper aus nicht durch allmählich zunehmendes Gasgeben, sondern mit Vollgas erfolgt. Die Rutschkupplung rutscht dann u.U. mehrere Sekunden durch, bevor ein Kraftfluß über die federbeaufschlagten ringförmigen Reibscheiben zustandekommt. Während der Durchrutschperioden entstehen große Wärmemengen in den üblicherweise als Trockenkupplungen ausgebildeten Rutschkupplungen, die, insbesondere wenn der Anfahrvorgang ggf. mehrfach wiederholt werden muß, zu einer Überhitzung der Reibflächen führen. Die über die Kupplungsteile übertragbaren Kräfte werden dadurch immer geringer, so daß die Kupplung schon nach verhältnismäßig kurzer Betriebsdauer unbrauchbar werden kann.

Der Erfindung liegt die Aufgabe zugrunde, die Anfahrbedingungen für den Erntebetrieb bei Maschinen der angegebenen Art zu verbessern.

Diese Aufgabe wird nach der Erfindung durch eine Ausgestaltung der Maschine entsprechend dem Anspruch 1 gelöst. Dadurch, daß bei dieser Ausgestaltung die Kupplungsnabe als allseits geschlossener Ringbehälter ausgebildet ist, der einen mit Kühlflüssigkeit gefüllten Ringraum bildet, an dem außenseitig die ringförmigen Reibscheiben in Reibschlußanlage gehalten sind, sind verbesserte Wärmeaufnahme- und -ableitbedingungen der Kupplung geschaffen, die zur Folge haben, daß die bei unsachgemäßer Durchführung des Start- bzw. Anlaufvorgangs der Arbeitsmaschine auftretenden starken Wärmeentwicklungen und die damit zu einer schnellen Zerstörung der Kupplung führenden Überhitzungen der zur Kraftübertragung zusammenwirkenden Kupplungsteile weitgehend vermieden werden. Die im Ringraum enthaltende Kühlflüssigkeit, wie Wasser, nimmt die beim Kupplungsvorgang entstehende Wärme nicht nur auf, sondern leitet sie über die vom Ringbehälter dargebotenen Austauschflächen an die Umgebung ab. Auf diese Weise wird eine erhebliche Verlängerung der Lebensdauer der Rutschkupplung erreicht.

Der Einsatz der erfindungsgemäß ausgestalteten Rutschkupplung ist dabei nicht nur auf die eingangs angeführte Mähmaschine beschränkt, sondern bei allen landwirtschaftlichen Arbeitsmaschinen mit ähnlichen Betriebsbedingungen vorteilhaft, wie beispielsweise bei Heuwerbungsmaschinen oder Maschinen zum Ernten von Maiskolben oder dgl. Körnerfrüchten, aber auch allgemein bei anderen Arbeitsmaschinen, bei denen unter rauhen Betriebsbedingungen häufige Überhitzungen der Rutschkupplung infolge von Bedienungsfehlern oder aus anderen Gründen zu befürchten sind, wie insbesondere bei schweren Baumaschinen großer Arbeitsbreite.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung schematisch veranschaulicht ist. In der Zeichnung zeigt:
- Fig. 1: eine Draufsicht auf eine Maschine zum Mähen von Mais und dgl. stengelartigem Erntegut in Verbindung mit einem Häcksler,
- Fig. 2: eine teilweise geschnittene Draufsicht auf den Bereich der Antriebseinrichtung der Mähmaschine nach Fig. 1 in gegenüber dieser vergrößetem Maßstab und
- Fig. 3: einen Axialschnitt durch eine Einzelheit der Antriebseinrichtung nach Fig. 2, wiederum in gegenüber dieser vergrößertem Maßstab.

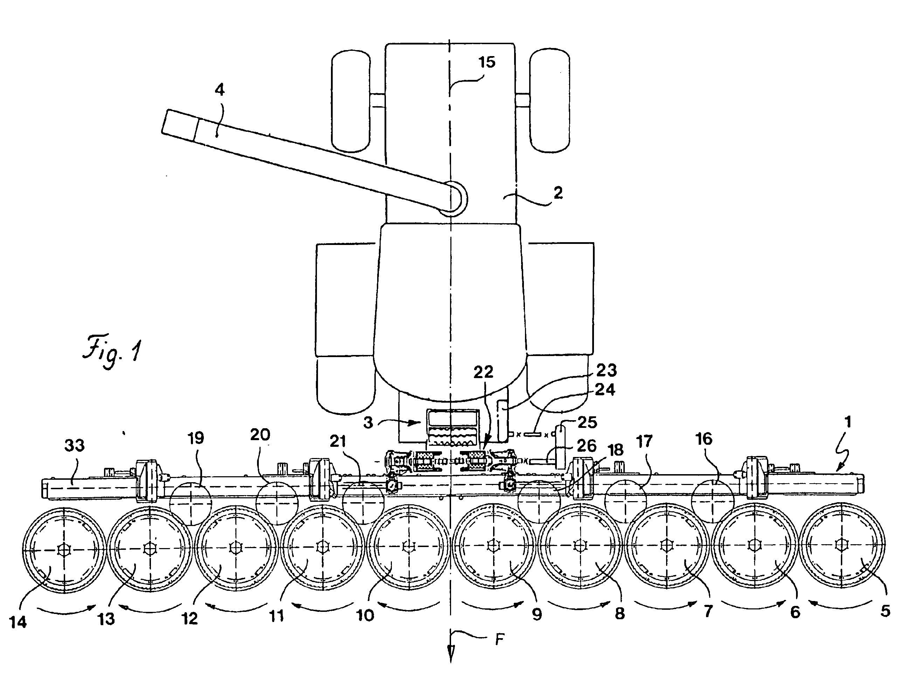

In Fig. 1 ist eine als Ganzes mit 1 bezeichnete Mähmaschine zum Mähen von Mais und dgl. stengelartigem Erntegut als landwirtschaftliche Arbeitsmaschine gezeigt, die als Mähvorsatz an einen Schlepper oder dgl. selbstfahrendes Fahrzeug 2 angebaut ist. Das Fahrzeug 2 umfaßt ferner einen Häcksler 3, der in bezug auf die Mähmaschine 4 mittig angeordnet ist. Über Einschubwalzen wird das gemähte Erntegut einem nicht näher dargestellten Häckselgebläse zugeführt, in dem es zerkleinert und sodann über ein Ausblasrohr 4 z.B. auf einen landwirtschaftlichen Ladewagen gefördert wird.

Die gemäß Fig. 1 vom Fahrzeug 2 in Arbeits- bzw. Fahrtrichtung gemäß dem Pfeil F vorbewegte Mähmaschine 1 umfaßt bei dem dargestellten Beispiel als rotierende Arbeitswerkzeige insgesamt zehn Einzugs- und Mähtrommeln 5 bis 14, von denen die Trommeln 5 bis 9 als Gruppe auf der einen, der in Fahrtrichtung F linken Seite und die Trommeln 10 bis 14 als Gruppe auf der anderen, der in Fahrtrichtung F rechten Seite einer vertikalen Längsmittelebene 15 des Fahrzeugs 2 bzw. der Maschine 1 angeordnet sind. Zu dieser Längsmittelebene 15 besitzen die beiden Gruppen von Einzugs- und Mähtrommeln 5 bis 9 einerseits und 10 bis 14 andererseits eine spiegelsymmetrische Anordnung. In die beiden Gruppen von Einzugs- und Mähtrommeln 5 bis 14 sind außerdem weitere Fördertrommeln 16, 17 und 18 bzw. 19, 20 und 21 für das geschnittene Erntegut im häckslernahen Zwickelbereich zwischen benachbarten Einzugs- und Mähtrommeln 6, 7, 8 und 9 der einen und 10, 11, 12 und 13 der anderen Gruppe einbezogen.

Für eine Drehbewegung der rotierenden Arbeitswerkzeuge in Form der Einzugs- und Mähtrommeln 5 bis 14 sowie der Fördertrommeln 16 bis 21 ist die Mähmaschine 1 mit einer als Ganzes mit 22 versehenen Antriebseinrichtung ausgestattet, die an ein fahrzeugseitiges Arbeitsgetriebe 23 angeschlossen ist, das bei dem dargestellten Beispiel von dem Zentral- bzw. Schnittlängengetriebe des Häckslers 3 gebildet ist. Vom Arbeitsgetriebe 23 wird der Antrieb über eine Gelenkwelle 24 an einer Zahnrädergetriebe 25 und von diesem über eine Gelenkwelle 26 an die Antriebseinrichtung 22 weitergeleitet.

Die Antriebseinrichtung 22 umfaßt bei dem dargestellten Beispiel als Anlauf- und Sicherheitskupplung zwei Rutschkupplungen 27 und 28 beidseits der vertikalen Längsmittelebene 15 der Maschine, von denen die Rutschkupplung 27 der in Fahrtrichtung F linken Maschinenhälfte mit den Einzugs- und Mähtrommeln 5 bis 9 und die Rutschkupplung 28 der in Fahrtrichtung F rechten Maschinenhälfte mit den Einzugs- und Mähtrommeln 10 bis 14 zugeordnet ist.

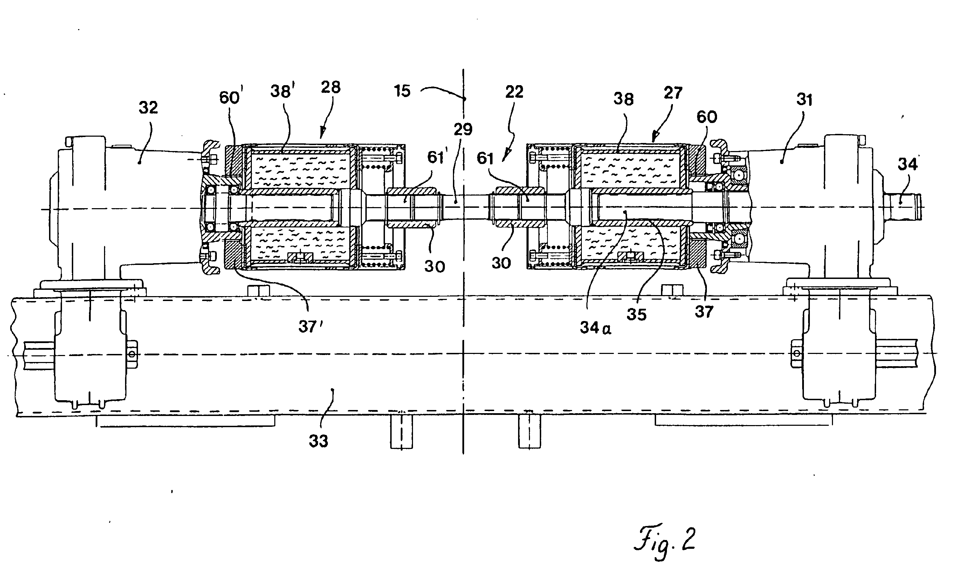

Wie insbesondere aus der vergrößerten Darstellung gemäß Fig. 2 ersichtlich ist, sind die beiden Kupplungen 27 und 28 über eine Verbindungswelle 29 mit Hülsenkupplungen 30 starr miteinander verbunden. Die beiden Kupplungen 27 und 28 haben eine baugleiche Ausbildung und sind zueinander spiegelsymmetrisch beidseits der vertikalen Längsmittelebene 15 angeordnet. Beide Kupplungen 27 und 28 sind jeweils mit einem Zahnradwinkelgetriebe 31 bzs. 32 verbunden, die den vom Schlepper 2 abgenommenen Antrieb auf je einen in einem Rahmenrohr 33 drehbar gelagerten wellenstrang (nicht dargestellt) zum Antrieb der linken Maschinenhälfte mit den Einzugs- und Mähtrommeln 5 bis 9 bzw. der rechten Maschinenhälfte mit den Einzugs- und Mähtrommeln 10 bis 14 übertragen. Das Rahmenrohr 33 ist seinerseits in nicht näher dargestellter Weise an einem Grundrahmen der Mähmaschine 1 befestigt. Wie aus Fig. 2 ferner ersichtlich ist, setzt sich ein Wellenstück 34 der Gelenkwelle 26 durch das Getriebe 31 fort und erstreckt sich bei 34a in die Kupplung 27, in der es durch eine Vielkeilverbindung 35 mit axialem Bewegungsspiel gehalten ist.

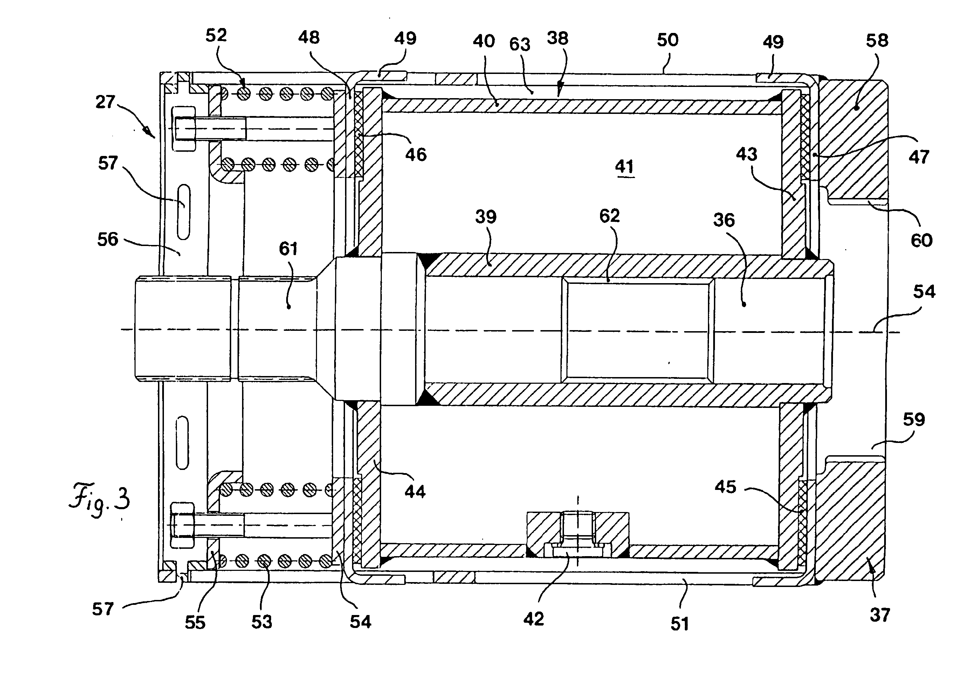

Da die beiden Kupplungen 27 und 28 baugleich ausgeführt sind, wird im folgenden ihr Aufbau lediglich anhand der Kupplung 27 in Verbindung mit der vergrößerten Darstellung in Fig. 3 näher erläutert. Demgemäß besitzt die Rutschkupplung 27 eine Kupplungsnabe mit einer Nabenöffnung 36 zur Aufnahme des in die Kupplung 27 eingeführten Wellenstumpfes 34a des fahrzeugseitigen Antriebswellenstücks 34 sowie ein Kupplungsgehäuse 37, über das die Antriebsverbindung zum Zahnradwinkelgetriebe 31 als Transmissionsgetriebe zu den rotierenden Arbeitswerkzeugen erfolgt.

Die Kupplungsnabe ist als allseits geschlossener Ringbehälter 38 ausgebildet, der eine den fahrzeugseitigen Antriebswellenstumpf 34a mit der Innenbohrung 36 aufnehmende Innenhülse 39 und einen diese umgebenden Außenmantel 40 umfaßt. Der Außenmantel 40 begrenzt umfangsseitig mit der Innenhülse 39 einen Ringraum 41, der mit Kühlflüssigkeit gefüllt und allseits geschlossen ist, mit Ausnahme einer im Außenmantel 40 belassenen Einfüllöffnung für die Kühlflüssigkeit, die jedoch bei Beendigung des Füllvorgangs ihrerseits durch eine Verschlußschraube 42 mit Dichtungsring flüssigkeitsdicht verschlossen wird. An der Außenseite der jeweils von einer Ringscheibe gebildeten Stirnwände 43 und 44 des Ringbehälters 38 ist je eine ringförmige Kupplungsreibscheibe 45 bzw. 46 in Reibschlußanlage gehalten.

Die Reibscheiben 45, 46 sind an ihrer von den Stirnwänden 43, 44 des Ringbehälters 40 abgewandten Stirnfläche jeweils mit einer am Kupplungsgehäuse 37 abgestützten Mitnahmeringscheibe 47 bzw. 48 fest verbunden. Die feste Verbindung der Reibscheiben 45, 46 mit den Mitnahmeringscheiben 47, 48 kann durch mechanische Verbindungsglieder, durch Verkleben, durch Aufspritzen des Reibscheibenmaterials oder in sonst geeigneter Weise erfolgen. Mit einwärts über die Reibscheiben 45, 46 hinweg abgewinkelten Führungsansätzen 49 sind die Mitnahmescheiben 47, 48 in umfangsseitigen achsparallelen Führungsschlitzen eines äußeren Hülsenmantels 50 des Kupplungsgehäuses 37 mit axialem Bewegungsspiel gehalten. Der Hülsenmantel 50 ist im übrigen gitterförmig mit Öffnungen 51 ausgebildet, die eine Wärmeabfuhr vom Ringbehälter 38 begünstigen.

Die Reibscheiben 45 und 46 sind für eine drehmomentabhängige Mitnahmeverbindung zwischen dem die Kupplungsnabe bildenden Ringbehälter 38 und dem Kupplungsgehäuse 37 federbeaufschlagt. Diese Federbeaufschlagung erfolgt mittels eines in das Kupplungsgehäuse 37 eingesetzten ringförmigen Federpakets 52, das aus einem Ring einzelner Schraubendruckfedern 53 mit in bezug auf die Kupplungsachse 54 achsparalleler Wirkrichtung besteht. Die Ringfedern 53 sind an ihren Stirnenden auf je einem Haltering 54 bzw. 55 abgestützt.

Die Kompression der Druckfedern 53 und damit das über den Anpreßdruck der Reibscheiben 45, 46 geregelte maximale Drehmoment, bei dem die Kupplung 27 durchrutscht, wird über einen Einstellring 56 eingestellt, der mit Rastnocken 57 für einen Verriegelungseingriff in Aufnahmeöffnungen des Kupplungsgehäuses 37 versehen ist. Dabei sind vorzugsweise zwei oder mehrere in Richtung der Kupplungsachse 54 voneinander beabstandete Ringe von Aufnahmeöffnungen vorgesehen, die ihrerseits in Umfangsrichtung entsprechend den Rastnocken 57 des Einstellringes 56 voneinander beabstandet sind. Der Einstellring 56 liegt im Einbauzustand mit seinem Innenring an der ihm zugewandten Stirnfläche des Halteringes 45 an und bestimmt somit im Einbauzustand die Druckkraft, je nach dem, in welchen Aufnahmeöffnungskranz seine Verriegelungsnocken 57 eingreifen. Sofern eine Einstellung des Drehmoments über das Druckfederpaket 52 entbehrlich ist, reicht selbstverständlich ein einziger Aufnahmelochkranz im Kupplungsgehäuse 37 für die Verriegelung des Einstellringes 56 aus.

Gegenüber dem den Einstellring 56 an seinem Innenumfang aufnehmenden offenen Ende weist das Kupplungsgehäuse 37 eine Stirnwand 58 auf, die konzentrisch zur Aufnahmebohrung 36 der Innenhülse 39 mit einer Anschlußöffnung 59 für eine drehfeste Verbindung des Kupplungsgehäuses 37 mit dem Transmissions- bzw. Zahnradwinkelgetriebe 31 versehen ist. Die drehfeste Verbindung erfolgt über eine Vielkeilverbindung 60 zwischen der Stirnwand 58 und dem Getriebe 31.

An ihrem von ihrer Einführungsöffnung für den Antriebswellenstumpf 34a gegenüberliegenden Ende ist die Innenhülse 39 mit einem koaxialen Wellenstumpf 61 fest verbunden, z.B. verschweißt. Der Wellenstumpf 61 ist ferner mit der Stirnwand 44 des Ringbehälters 38 fest verbunden bzw. verschweißt. Das gleiche gilt für die Stirnwand 43 in bezug auf die Innenhülse 39. Der Wellenstumpf 61 führt durch das Federpaket 52 zur Verbindungswelle 29, mit der er über die Hülsenkupplung 30 verbunden ist. Die Verbindung mit der Hülsenkupplung 30 erfolgt wiederum über eine Vielkeilverbindung.

Aus Fig. 3 ist ferner eine auf den mittleren Bereich der Hülsenbohrung 36 beschränkte Anordnung von Nuten und Stegen 58 zur Ausbildung der Vielkeilverbindung 35 mit dem entsprechend ausgebildeten Wellenstumpf 34a des Wellenstücks 34 ersichtlich.

Im gekuppelten Zustand erfolgt der Kraftschluß über die federbeaufschlagten Reibscheiben 45, 46 von dem durch die Antriebswelle 34 in Drehung versetzten Ringbehälter 38 auf das Kupplungsgehäuse 37, speziell die Stirnwand 58, deren Drehbewegung wiederum durch die Vielkeilverbindung 60 auf das Getriebe 31 übertragen wird. Dabei wird zugleich über den Wellenstumpf 61 der Drehantrieb auf die Verbindungswelle 29 und von dort über einen dem Wellenstumpf 61 entsprechenden Wellenstumpf 61', den Ringbehälter 38' und das Kupplungsgehäuse 37' der Kupplung 28 über die Keilwellenverbindung 60' auf das Zahnradwinkelgetriebe 32 übertragen.

Wird im Betrieb der Kupplung 27 das vorgegebene Drehmoment überschritten, so rutscht die Kupplung durch, und es erfolgt eine relative Drehbewegung zwischen dem Kupplungsgehäuse 37 und dem die Kupplungsnabe bildenden Ringbehälter 38 mit Gleitreibung an der Grenzfläche zwischen den Ringscheiben 45, 46 und den Stirnwänden 43, 44 des Ringbehälters 38. Die relative Drehbewegung wird dadurch ermöglicht, daß das Kupplungsgehäuse 37 mit seinem Hülsenmantel 50 den Ringbehälter 38 unter Belassung eines umfangsseitigen Ringspalters 63 konzentrisch umgibt.

## Patentansprüche

1. Landwirtschaftliche Arbeitsmaschine für einen Anbau an einen Schlepper oder dgl. selbstfahrendes Fahrzeug, insbesondere Mähmaschine zum Mähen von Gras, Getreide oder anderen Halmfrüchten, mit einer Mehrzahl von rotierenden Arbeitswerkzeugen, die für ihre Drehbewegung von einer an ein Arbeitsgetriebe des Fahrzeugs anschließbaren Antriebseinrichtung antreibbar sind, die als Anlauf- und Sicherheitskupplung zumindest eine Rutschkupplung mit einer einen fahrzeugseitigen Antriebswellenstumpf aufnehmenden Kupplungsnabe, einem Kupplungsgehäuse (37, 50) und zwischen diesen angeordneten federbeaufschlagten (52) ringförmigen Reibscheiben (45,46) fur eine drehmomentabhängige Mitnahmeverbindung zwischen Kupplungsnabe und -gehäuse umfaßt, **dadurch gekennzeichnet, daß** die Kupplungsnabe als allseits geschlossener Ringbehälter (38) ausgebildet ist, der eine den fahrzeugseitigen Antriebswellenstumpf (34a) aufnehmende Innenhülse (39) und einen diese umgebenden Außenmantel (40) umfaßt, der mit der Innenhülse (39) einen mit Kühlflüssigkeit gefüllten Ringraum (41) umfangsseitig begrenzt, und daß an der Außenseite der jeweils von einer Ringscheibe gebildeten Stirnwände (43,44) des Ringbehälters (38) je eine Reibscheibe (45,46) in Reibschlußanlage gehalten ist.

2. Maschine nach Anspruch 1, **dadurch gekennzeichnet, daß** die Reibscheiben (45,46) an ihrer von den Stirnwänden (43,44) des Ringbehälters (38) abgewandten Stirnfläche jeweils mit einer am Kupplungsgehäuse (37) abgestützten Mitnahmeringscheibe (47,48) fest verbunden sind.

3. Maschine nach Anspruch 1 oder 2, **dadurch gekennzeichnet, daß** die Innenhülse (39) drehfest, aber axial beweglich mit dem Antriebswellenstumpf (34a) verbunden ist.

4. Maschine nach einem der Ansprüche 1 bis 3, **dadurch gekennzeichnet, daß** das Kupplungsgehäuse (37) den Ringbehälter (38) unter Belassung eines umfangsseitigen Ringspaltes (63) konzentrisch umgibt.

5. Maschine nach einem der Ansprüche 1 bis 4, **dadurch gekennzeichnet, daß** das Kupplungsgehäuse (37) als Hülse mit einem gitterförmigen Hülsenmantel (50) ausgebildet ist.

6. Maschine nach einem der Ansprüche 1 bis 5, **dadurch gekennzeichnet, daß** das Kupplungsgehäuse (37) eine Stirnwand (58) aufweist, die mit einer Anschlußöffnung (59) für eine drehfeste Verbindung des Kupplungsgehäuses (37) mit einem Transmissionsgetriebe (31;32) der Antriebseinrichtung (22) versehen ist.

7. Maschine nach einem der Ansprüche 1 bis 6, **dadurch gekennzeichnet, daß** die Innenhülse (22) der Kupplung (27;28) an ihrem der Einführungsöffnung für den Antriebswellenstumpf (34a) gegenüberliegenden Ende mit einem koaxialen Wellenstumpf (61) einer Verbindungswelle (29) fest verbunden ist, die zu einer baugleichen, spiegelsymmetrisch angeordneten Kupplung (28;27) führt.

8. Rutschkupplung für eine Antriebseinrichtung einer Arbeitsmaschine, insbesondere einer an einen Schlepper oder dgl. selbstfahrendes Fahrzeug anbaubaren landwirtschaftlichen Arbeitsmaschine wie einer Mähmaschine zum Mähen von Gras, Getreide oder anderen Halmfrüchten, mit einer Mehrzahl von rotierenden Arbeitswerkzeugen, wobei die Antriebseinrichtung für den Drehantrieb der Arbeitswerkzeuge an ein Arbeitsgetriebe des Fahrzeugs anschließbar ist und die Rutschkupplung eine einen fahrzeugseitigen Antriebswellenstumpf aufnehmende Kupplungsnabe, ein Kupplungsgehäuse (37,50) und zwischen diesen angeordnete federbeaufschlagte (52) ringförmige Reibscheiben (45,56) für eine drehmomentabhängige Mitnahmeverbindung zwischen Kupplungsnabe und -gehäuse umfaßt, **dadurch gekennzeichnet, daß** die Kupplungsnabe als allseits geschlossener Ringbehälter (38) ausgebildet ist, der eine den fahrzeugseitigen Antriebswellenstumpf (34a) aufnehmende Innenhülse (39) und einen diese umgebenden Außenmantel (40) umfaßt, der mit der Innenhülse (39) einen mit Kühlflüssigkeit gefüllten Ringraum (41) umfangsseitig begrenzt, und daß an der Außenseite der jeweils von einer Ringscheibe gebildeten Stirnwände (43,44) des Ringbehälters (38) je eine Reibscheibe (45,46) in Reibschlußanlage gehalten ist.

9. Kupplung nach Anspruch 8, **dadurch gekennzeichnet, daß** die Reibscheiben (45,46) an ihrer von den Stirnwänden (43,44) des Ringbehälters (38) abgewandten Stirnfläche jeweils mit einer am Kupplungsgehäuse (37) abgestützten Mitnahmeringscheibe (47,48) fest verbunden sind.

10. Kupplung nach Anspruch 8 oder 9, **dadurch gekennzeichnet, daß** die Innenhülse (39) drehfest, aber axial beweglich mit dem Antriebswellenstumpf (34a) verbindbar ist.

11. Kupplung nach einem der Ansprüche 8 bis 10, **dadurch gekennzeichnet, daß** das Kupplungsgehäuse (37) den Ringbehälter (38) unter Belassung eines umfangsseitigen Ringspaltes (63) konzentrisch umgibt.

12. Kupplung nach einem der Ansprüche 8 bis 11, **dadurch gekennzeichnet, daß** das Kupplungsgehäuse (37) als Hülse mit einem gitterförmigen Hülsenmantel (50) ausgebildet ist.

13. Kupplung nach einem der Ansprüche 8 bis 12, **dadurch gekennzeichnet, daß** das Kupplungsgehäuse (37) eine Stirnwand (58) aufweist, die mit einer Anschlußöffnung (59) für eine drehfeste Verbindung des Kupplungsgehäuses (37) mit einem Transmissionsgetriebe (31;32) der Antriebseinrichtung versehen ist.

14. Kupplung nach einem der Ansprüche 8 bis 13, **dadurch gekennzeichnet, daß** die Innenhülse (39) an ihrem der Einführungsöffnung für den Antriebswellenstumpf (34a) gegenüberliegenden Ende mit einem über die angrenzende Stirnwand (44) des Ringbehälters (38) nach außen geführten koaxialen Wellenstumpf (61) für eine Verbindungswelle fest verbunden ist.

## Claims

1. An agricultural machine for attachment to a tractor or like self-propelled vehicle, especially a mower for mowing grass, cereals or other stalked crops, with a plurality of rotating working tools which can be driven for their rotary movement from a drive device attachable to a working gear of the vehicle, which device comprises at least one slipping clutch as a starting and safety coupling, with a clutch hub receiving a drive stub shaft on the side of the vehicle, a clutch housing (37, 50) and spring biased (52) friction discs (45, 46) of annular form arranged therebetween for a torque-dependent entraining connection between the clutch hub and housing, **characterized in that** the clutch hub is in the form of an annular container (38) closed on all sides, which comprises an inner sleeve (39) receiving the drive stub shaft (34a) on the side of the vehicle and an outer casing (40) surrounding the inner sleeve (39) and forming therewith an annular chamber (41) filled round the periphery with cooling fluid, and **in that** a friction disc (45, 46) is retained in frictional engagement on the outside of each end wall (43, 44) of the annular container (38), formed as an annular disc.

2. A machine according to claim 1, **characterized in that** the friction discs (45, 46) are each fixedly attached at their faces facing away from the end walls (43, 44) of the annular container (38) to an entraining annular disc (47, 48) supported on the clutch housing (37).

3. A machine according to claim 1 or 2, **characterized in that** the inner sleeve (39) is connected to the drive stub shaft (34a) rotationally fast but axially movable.

4. A machine according to any of claims 1 to 3, **characterized in that** the clutch housing (37) surrounds the annular container (38) concentrically, leaving a peripheral annular gap (63).

5. A machine according to any of claims 1 to 4, **characterized in that** the clutch housing (37) is made in the form of a sleeve with a sleeve casing (50) formed as a grating.

6. A machine according to any of claims 1 to 5, **characterized in that** the clutch housing (37) has an end wall (58) with an attachment opening (59) for rotationally fast connection of the clutch housing (37) to a transmission gear (31, 32) of the drive device (22).

7. A machine according to any of claims 1 to 6, **characterized in that** the inner sleeve (39) of the clutch (27; 28) is fixed at its end opposite the insertion opening for the drive stub shaft (34a) by a coaxial stub shaft (61) to a connecting shaft (29) which leads to a mirror symmetrical clutch (28; 27) of like construction.

8. A slipping clutch for a drive device of a machine, especially an agricultural machine attachable to a tractor or like self-propelled vehicle, such as a mowing machine for mowing grass, cereals or other stalked crops, with a plurality of rotating working tools, wherein the drive device for the rotary drive of the working tools can be attached to a working gear of the vehicle and the slipping clutch comprises a clutch hub receiving a drive stub shaft on the vehicle side, a clutch housing (37, 50) and spring biased friction discs (45, 46) arranged therebetween for a torque dependent entraining connection between the clutch hub and housing, **characterized in that** the clutch hub is in the form of an annular container (38) closed on all sides, which comprises an inner sleeve (39) receiving the drive stub shaft (34a) on the side of the vehicle and an outer casing (40) surrounding the inner sleeve (39) and forming therewith an annular chamber (41) filled round the periphery with cooling fluid, and **in that** a friction disc (45, 46) is retained in frictional engagement on the outside of each end wall (43, 44) of the annular container (38), formed as an annular disc.

9. A clutch according to claim 8, **characterized in that** the friction discs (45, 46) are each fixedly attached at their faces facing away from the end walls (43, 44) of the annular container (38) to an entraining annular disc (47, 48) supported on the clutch housing (37).

10. A clutch according to claim 8 or 9, **characterized in that** the inner sleeve (39) is connected to the drive stub shaft (34a) rotationally fast but axially movable.

11. A clutch according to any of claims 8 to 10, **characterized in that** the clutch housing (37) surrounds the annular container (38) concentrically, leaving a peripheral annular gap (63).

12. A clutch according to any of claims 8 to 11, **characterized in that** the clutch housing (37) is made in the form of a sleeve with a sleeve casing (50) formed as a grating.

13. A clutch according to any of claims 8 to 12, **characterized in that** the clutch housing (37) has an end wall (58) with an attachment opening (59) for rotationally fast connection of the clutch housing (37) to a transmission gear (31, 32) of the drive device (22).

14. A clutch according to any of claims 8 to 13, **characterized in that** the inner sleeve (39) is fixed at its end opposite the insertion opening for the drive stub shaft (34a) to a stub shaft (61) for a connecting shaft, extending out through the adjoining end wall (44) of the annular container (38).

## Revendications

1. Machine de travail agricole destinée à être attelée à un tracteur ou autre véhicule automoteur, en particulier une faucheuse destinée à couper l'herbe, les céréales ou autres végétaux sur tiges, comportant une pluralité d'outils de travail rotatifs, qui sont entraînés en rotation par un dispositif d'entraînement, qui peut être raccordé à un train d'engrenages du véhicule et qui, sous la forme d'un accouplement de démarrage et d'arrêt, comporte au moins un dispositif d'accouplement à friction avec un moyeu d'accouplement recevant un bout d'arbre d'entraînement du côté véhicule, un carter d'accouplement (37, 50) et des disques de friction (45, 46) annulaires, qui sont sollicités par un ressort (52) et intercalés entre ledit moyeu et ledit carter et qui sont destinés à assurer une liaison d'entraînement entre le moyeu d'accouplement et le carter,
**caractérisée en ce que** le moyeu d'accouplement est conçu sous forme de récipient annulaire (38) fermé de toutes parts, lequel comporte un manchon intérieur (39), recevant le bout d'arbre d'entraînement (34a) du côté véhicule, et une paroi latérale extérieure (40), qui entoure ledit manchon et qui, conjointement avec le manchon intérieur (39), délimite le pourtour d'un espace annulaire (41) rempli de liquide de refroidissement, et **en ce qu'**un disque de friction (45, 46) est maintenu en contact de friction sur la face extérieure de chacune des parois frontales (43, 44) du récipient annulaire (38), formées chacune par un disque annulaire.

2. Machine selon la revendication 1, **caractérisée en ce que** les disques de friction (45, 46), sur leur face frontale opposée aux faces frontales (43,44) du récipient annulaire (38), sont reliées fermement chacune à un disque annulaire d'entraînement (47, 48), en appui sur le carter d'accouplement (37).

3. Machine selon la revendication 1 ou 2, **caractérisée en ce que** le manchon intérieur (39) est relié au bout d'arbre d'entraînement (34a) de manière immobile en rotation, mais mobile dans le sens axial.

4. Machine selon l'une quelconque des revendications 1 à 3, **caractérisée en ce que** le carter d'accouplement (37) entoure concentriquement le récipient annulaire (38) en laissant une fente annulaire (63) du côté périphérique.

5. Machine selon l'une quelconque des revendications 1 à 4, **caractérisée en ce que** le carter d'accouplement (37) est réalisé sous forme de manchon avec une paroi latérale (50) en forme de grille.

6. Machine selon l'une quelconque des revendications 1 à 5, **caractérisée en ce que** le carter d'accouplement (37) comporte une paroi frontale (58), qui est munie d'un orifice d'accouplement (59) pour une liaison immobile en rotation entre le carter d'accouplement (37) et un engrenage de transmission (31; 32) du dispositif d'entraînement (22).

7. Machine selon l'une quelconque des revendications 1 à 6, **caractérisée en ce que** le manchon intérieur (39) du dispositif d'accouplement (27 ; 28), au niveau de son extrémité opposée à l'orifice d'introduction du bout d'arbre d'entraînement (34a), est relié fermement à un bout d'arbre (61) coaxial de l'arbre de liaison (29), qui entraîne un dispositif d'accouplement (28 ; 27) de même construction, agencé symétriquement.

8. Dispositif d'accouplement par friction pour un dispositif d'entraînement d'une machine de travail, en particulier une machine de travail agricole destinée à être attelée à un tracteur ou autre véhicule automoteur, telle qu'une faucheuse destinée à couper l'herbe, les céréales ou autres végétaux sur tiges, comportant une pluralité d'outils de travail rotatifs, qui sont entraînés en rotation par un dispositif d'entraînement, ledit dispositif d'entraînement pouvant être raccordé à un train d'engrenages du véhicule pour l'entraînement en rotation des outils de travail, et le dispositif d'accouplement par friction comporte un moyeu d'accouplement recevant un bout d'arbre d'entraînement du côté véhicule, un carter d'accouplement (37, 50) et des disques de friction (45, 46) annulaires, qui sont sollicités par un ressort (52) et intercalés entre ledit moyeu et ledit carter et qui sont destinés à assurer entre le moyeu d'accouplement et le carter une liaison d'entraînement en fonction du couple de rotation, **caractérisé en ce que** le moyeu d'accouplement est conçu sous forme de récipient annulaire (38) fermé de toutes parts, lequel comporte un manchon intérieur (39), recevant le bout d'arbre d'entraînement (34a) du côté véhicule, et une paroi latérale extérieure (40), qui entoure ledit manchon et qui, conjointement avec le manchon intérieur (39), délimite le pourtour d'un espace annulaire (41) rempli de liquide de refroidissement, et **en ce qu'**un disque de friction (45, 46) est maintenu en contact de friction sur la face extérieure de chacune des parois frontales (43, 44) du récipient annulaire (38), formées chacune par un disque annulaire.

9. Dispositif d'accouplement selon la revendication 8, **caractérisé en ce que** les disques de friction (45, 46), sur leur face frontale opposée aux faces frontales (43,44) du récipient annulaire (38), sont reliées fermement chacune à un disque annulaire d'entraînement (47, 48), en appui sur le carter d'accouplement (37).

10. Dispositif d'accouplement selon la revendication 8 ou 9, **caractérisé en ce que** le manchon intérieur (39) est relié au bout d'arbre d'entraînement (34a) de manière immobile en rotation, mais mobile dans le sens axial.

11. Dispositif d'accouplement selon l'une quelconque des revendications 8 à 10, **caractérisé en ce que** le carter d'accouplement (37) entoure concentriquement le récipient annulaire (38) en laissant une fente annulaire (63) du côté périphérique.

12. Dispositif d'accouplement selon l'une quelconque des revendications 8 à 11, **caractérisé en ce que** le carter d'accouplement (37) est réalisé sous forme de manchon avec une paroi latérale (50) en forme de grille.

13. Dispositif d'accouplement selon l'une quelconque des revendications 8 à 12, **caractérisé en ce que** le carter d'accouplement (37) comporte une paroi frontale (58), qui est munie d'un orifice d'accouplement (59) pour une liaison immobile en rotation entre le carter d'accouplement (37) et un engrenage de transmission (31 ; 32) du dispositif d'entraînement (22).

14. Dispositif d'accouplement selon l'une quelconque des revendications 8 à 13, **caractérisé en ce que** le manchon intérieur (39), au niveau de son extrémité opposée à l'orifice d'introduction du bout d'arbre d'entraînement (34a), est relié fermement à un bout d'arbre (61) coaxial, guidé vers l'extérieur au-delà de la paroi frontale (44) adjacente du récipient annulaire (38), pour former un arbre de liaison.
